# EUROPEAN PATENT SPECIFICATION

(11) **EP 1 500 599 B1**
(45) Date of publication and mention of the grant of the patent: **09.05.2007**
(21) Application number: 03254634.3
(22) Date of filing: 23.07.2003
(51) Int. Cl.: B65D 19/00, B29C 51/16, B29C 63/02

(54) **Pallet and method for manufacturing the same**
Palette und Verfahren zu deren Herstellung
Palette et procédé pour sa fabrication

(43) Date of publication of application: 26.01.2005
(73) Proprietor: Airdex International, Inc., Henderson, Nevada 89074 (US)
(72) Inventor: Dummett, Lawrence W., New South Wales (AU)
(74) Representative: Coates, Ian Harold

(56) References cited:
- EP-A- 0 480 451
- WO-A-95/23682
- CH-A- 404 185
- DE-A- 2 045 712
- GB-A- 1 308 036

## Description

### BACKGROUND OF THE INVENTION

Field of Invention: This invention is in the general field of load-bearing structures and, more particularly, is a load bearing structure made from an expanded polystyrene core that is chemically combined with high impact polystyrene.

Description of the Prior Art: A shipping pallet is a well known load-bearing, moveable platform whereon articles are placed for shipment. The pallet usually is loaded with a multiplicity of items, such as cartons or boxes. The loaded pallet is movable with either a pallet truck or a forklift.

There is a nine billion dollar market for pallets in the United States. There is a thirty billion dollar world wide market. Approximately ninety percent of these markets is for pallets made from wood.

The weight of the wood pallet is in a range of 18 to 32 kg (forty to seventy pounds). Therefore, the weight of a cargo shipped on the wood pallet is reduced by from 18 to 32 kg (forty to seventy pounds) to provide for the weight of the wood pallet

It should be understood that injuries caused by wood splinters and nails are frequent occurrences among people who handle the wood pallet. Additionally, disposal of the wood pallet at the end of its useful life is a threat to the environment.

There has been concern among nations about the use of the wood pallet causing an import of wood-boring insects, including the Asian Longhorned Beetle, the Asian Cerambycid Beetle, the Pine Wood Nematode, the Pine Wilt Nematode and the Anoplophora Glapripwnnis. Exemplary of damage caused by imported insects is the fate of the Chestnut Tree in the United States. There was a time when it was said that a squirrel could cross the United States on Chestnut Tree limbs without ever touching the ground. Insect infestation has caused the extinction of the Chestnut Tree in the United States.

Therefore, the wood pallet's weight, the injuries that it causes, its threat to the environment and the possibility its causing an importation of wood-boring insects militates against the use of the wood pallet. As explained hereinafter, there is an attractive alternative to the wood pallet.

European patent application EP 0480451 (Addeo, Pinetti, Vezzoli and Mascia) describes one process for preparing thermoinsulating and/or structural foamed articles by thermoforming on foamed performs.

PCT application WO 95/23682 (Match) describes one method and apparatus for forming a structural covering on an article.

German patent DE 2045712 (Melporit GmbH & Co KG) describes a pallet according to the preamble of appended claim 1, made of expanded plastics with a covering on the underside and on the upper side of plastics which may be applied by spreading, spraying or as a sheet or of aluminium foil.

### SUMMARY OF THE INVENTION

According to a first aspect of the present invention there is provided a dunnage platform according to claim 1. Another aspect relates to a method of making said pallet, in accordance with claim 4.

An object of the invention is an easily movable load bearing structure that is not likely to carry wood-boring insects.

Another object of the invention is a movable load bearing structure that does not have splinters and nails that may cause injury.

According to the present invention, a dunnage platform has an expanded polystyrene core with a region proximal to its surface that is chemically combined with a high impact polystyrene.

Because of a chemical combination of components, comparing the core before the chemical combination to the dunnage platform that is formed, there is an increase in strength to weight ratio of as much as 1000:1 that allows the dunnage platform to carry loads comparable to loads carried by a wooden pallet. The dunnage platform does not support insect life and does not have splinters and nails that cause injury.

Other objects, features and advantages of the invention should be apparent from the following description of a preferred embodiment thereof as illustrated in the accompanying drawing.

### BRIEF DESCRIPTION OF THE DRAWING

Fig. 1 is a perspective view of a top side of a core of a dunnage platform that is in accordance with the invention;
Fig. 2 is a perspective view of a bottom side of the core of fig. 1;
Fig. 3 is a perspective view of a forming mold;
Fig. 4 is a side elevation of the core of fig. 1 within the forming mold of fig. 3 positioned below a clamping frame with a first high impact polystyrene sheet clamped therein in preparation for a first of two parts of a chemical combination process.;
Fig. 5 is a perspective view of the clamping frame and the first sheet of fig. 4;
Fig 5A is a plan view of the first sheet of fig 3;
Fig. 5B is a view of fig. 5 taken along the line 5B-5B;
Fig. 6 is a side elevation of the core of within the forming mold of fig. 3 positioned below the clamping frame after the first sheet has been heated;
Fig. 7 is a side elevation of the clamping frame seated upon marginal portion of the bottom side of the core;
Fig. 8 is a perspective view of the bottom side wherein holes have been drilled through strengthened polystyrene;
Fig. 9 is a side elevation of the core within the forming mold positioned below the clamping frame with a second high impact polystyrene sheet clamped therein in preparation for the second part of the chemical combination process;
Fig. 10 is a side elevation of the core within the forming mold positioned below the clamping frame after the second sheet has been heated; and
Fig. 11 is a side elevation of the clamping frame of fig. 10 seated upon a marginal portion of the top side of the core.

### DESCRIPTION OF THE PREFERRED EMBODIMENT

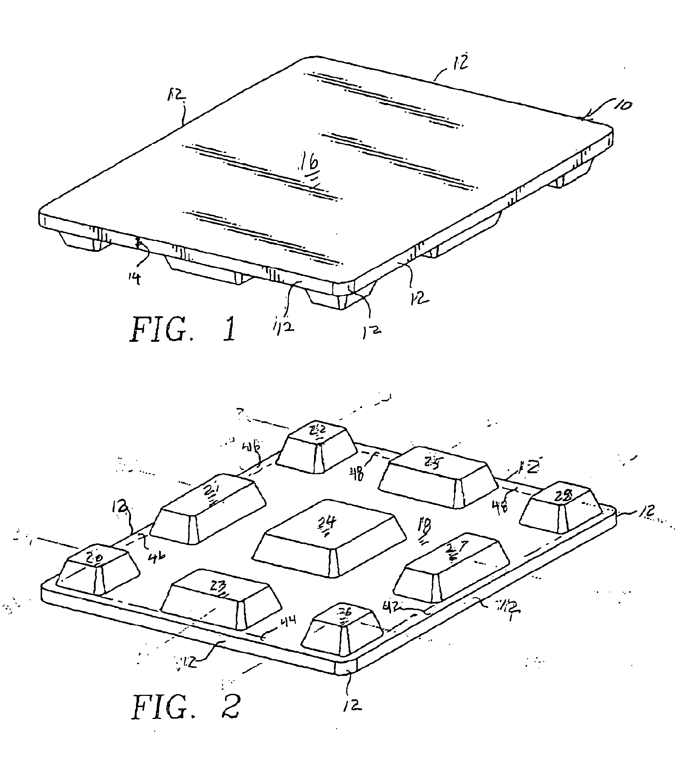

As shown in figs. 1 and 2, an expanded polystyrene core 10 is in the general shape of a rectangular slab with an edge 12 (fig. 1) that has a width14 which is approximately 4.5cm (1 3/4 inches). The core 10 has a smooth topside 16 that is on the order of 122cm (forty eight inches) long and 102cm (forty inches) wide. A bottom side 18 (fig. 2) of the core 10 includes legs 20-28 approximately 10cm (four inches) long extending therefrom.

The edge 12 is proximal to marginal spaces 42, 44, 46, 48 on the bottom side 18. The marginal spaces 42, 44, 46, 48 separate the legs 26-28, the legs 20, 23 26, the legs 20-22 and the legs 22, 25,28, respectively, from the edge 12.

Because the core 10 is made from expanded polystyrene, it does not have sufficient structural strength to be useable as a load bearing platform. A dunnage platform with sufficient strength is formed by chemically combining a region of the core 10, proximal to its surface, with a high impact polystyrene. Expanded polystyrene and high impact polystyrene are well known. The dunnage platform described hereinafter has substantially the same dimensions as the core 10.

A first of two parts of a chemical combination process causes portions of the expanded polystyrene proximal to the bottom side 18 to be chemically combined with the high impact polystyrene to form strengthened polystyrene. Additionally, a portion of the expanded polystyrene that is proximal to the edge 12 and in a proximal relationship to the bottom side 18 is chemically combined with the high impact polystyrene to form the strengthened polystyrene,

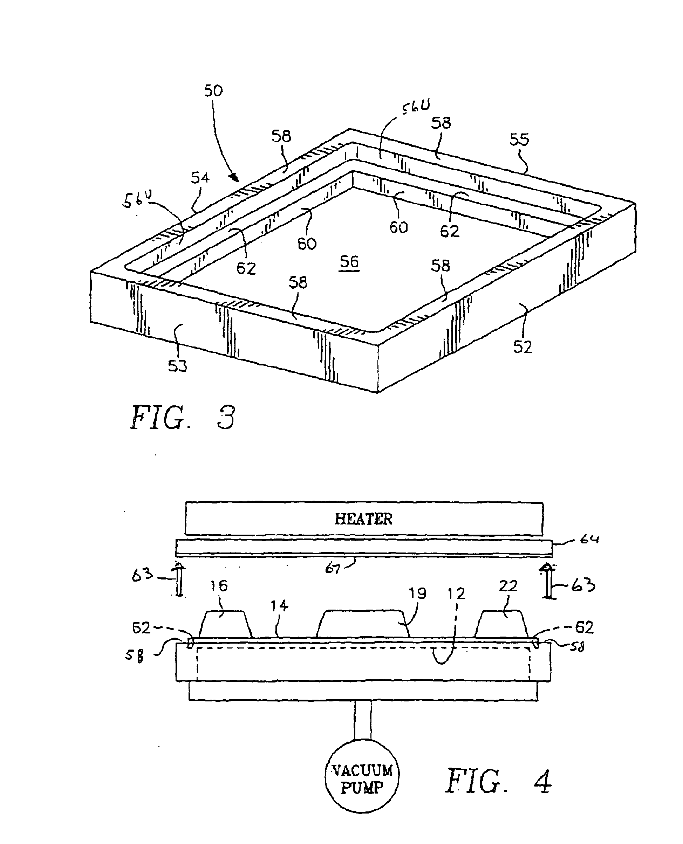

As shown in fig. 3, a forming mold 50 has rectangularly disposed walls 52-55 that define an interior 56 and a top surface 58. An interior surface 56U of the walls 52-55 outline a portion of the interior 56 that is complimentary to a shape of the core 10 outlined by the edge 12.

An interior of the walls 52-55 form a shelf 60 that extends around the interior 56. The shelf 60 has a surface 62 that is parallel to the surface 58. For reason's explained hereinafter, a displacement between the surfaces 58, 62 is less than one half of the width 14 (fig. 1). In this embodiment, the displacement between the surfaces 58, 62 is one third of the width 14.

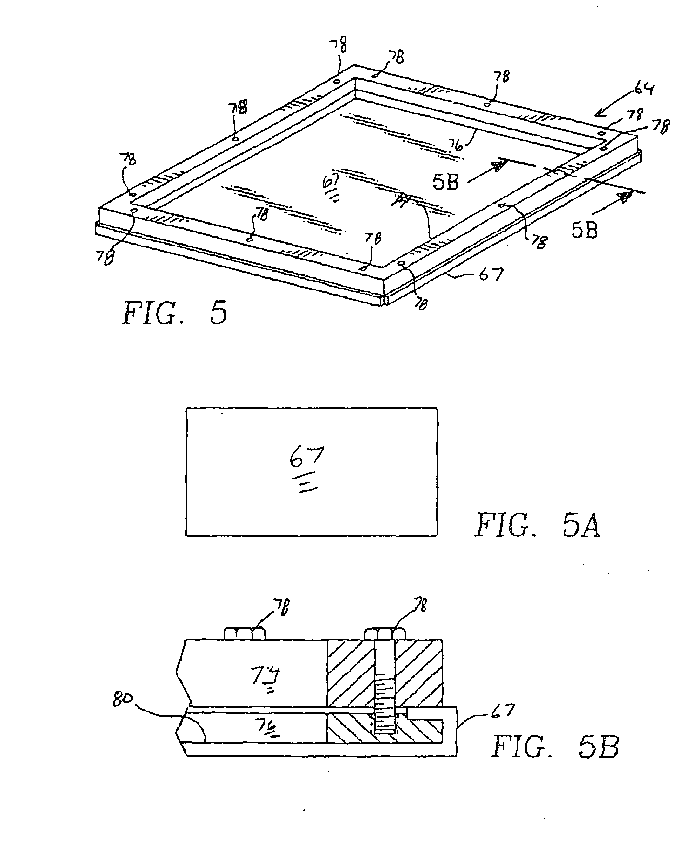

As shown in fig. 4, the mold 50 is moveable in a direction of the arrows 63. The core 10 is retained within the mold 50 with a marginal portion of the top side 16 that is proximal to the edge 12 is seated upon the surface 62 (fig. 3) whereby the top side 16 is maintained within the mold 50. Since the distance between the surfaces 58, 62 is one third of the width 14, two thirds of the edge 12 extends from the mold 50. Additionally, the bottom side 18 extends from the mold 50.

A fixedly positioned clamping frame 64 has a first high impact polystyrene sheet 67 clamped therein. A heater 68 is positioned proximal to the frame 64.

As shown in fig. 5, the frame 64 is made from an upper rectangular frame 74 and a lower rectangular frame 76 that are held together by a plurality of screws 78. The length and width of the upper frame 74 is substantially equal to the length and width, respectively, of the lower frame 76.

As shown in figs. 5A, and 5B, with the screws 78 not tightened, edges of the sheet 67 (fig. 5A) are inserted between the frames 74, 76 (fig. 5B) in much the same way that edges of a bed sheet are inserted between a mattress and a box spring. At corners of the frames 74, 76, the sheet 67 is folded in much the same way that edges of the bed sheet are folded to form what is known as a hospital corner and inserted between the frames 74, 76. When the edges and corners of the sheet 67 are inserted, the sheet 67 extends in a plane that causes it to cover a side 80 of the frame 76. Thereafter, the screws 78 are tightened whereby the sheet 67 is fixedly maintained in the frame 64.

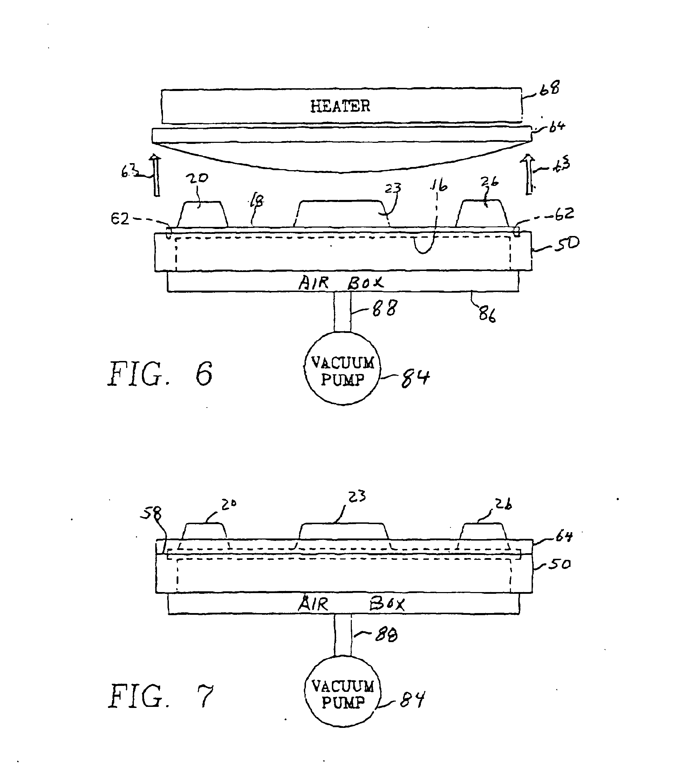

As shown in fig. 6, in the first part of the process, the heater 68 heats the sheet 67 to a temperature in a range of 145°C to 191 °C (293°F to 375°F). In response to being heated, the sheet 67 characteristically sags. After the sheet 67 is heated, the heater 68 is removed and the mold 50 is moved in a direction of the arrows 63.

It should be understood that when the sheet 67 is heated, it becomes fragile. Because the frame 64 is fixedly positioned, a risk of damage to the sheet 67 is minimized.

As shown in fig. 7, the mold 50 is moved until a portion of the heated sheet 67 that covers the side 80 (fig. SB) is seated upon the surface 58 (fig. 3). The mold 50 is connected to a vacuum pump 84 through an air box 86 and a connector line 88.

It should be understood that the core 10 is porous. When the vacuum pump 84 operates, air may pass through the core 10, from the top side 16, to the pump 84. The heated sheet 67 is not porous, thereby causing one atmosphere of air pressure that draws the heated sheet 67 onto the bottom side 18 and the two thirds of the edge 12 that extends from the mold 50.

The expanded polystyrene proximal to the bottom side 18 and proximal to the two thirds of the edge 12 that extend above the mold 50 chemically combine with the high impact polystyrene of the sheet 67 to form the strengthened polystyrene. The strengthened polystyrene is not porous. The side 18 and the legs 20-28 with the strengthened polystyrene proximal to their surface are hereinafter referred to as a side 18C with legs 20C-28C, respectively.

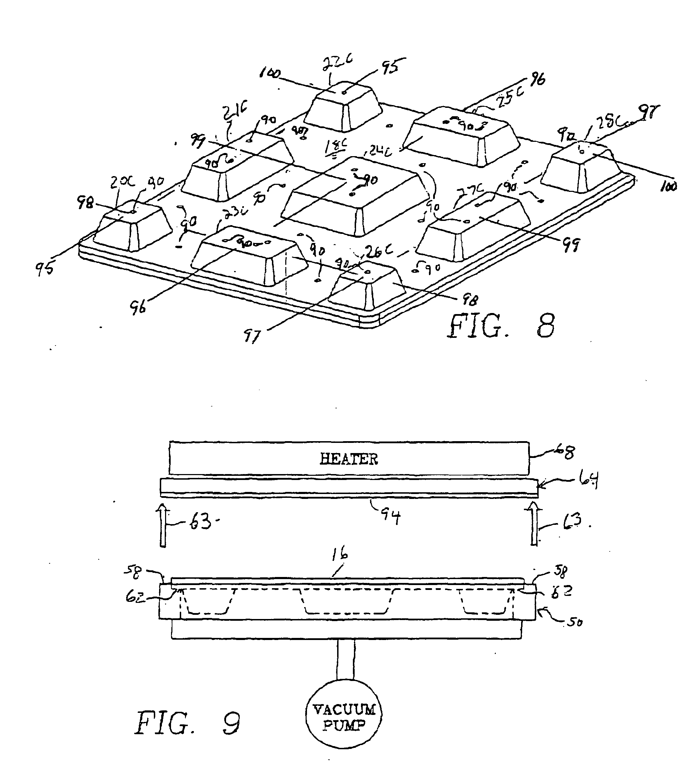

As shown in fig. 8, because the strengthened polystyrene is not porous, a plurality of holes 90 are drilled into the side 18C to approximate the porosity of expanded polystyrene.

As shown in fig. 9, in a second part of the process, the side 18C is retained within the mold 50 with the marginal spaces 42, 44, 46, 48 (fig. 2) seated upon the surface 62 . Since the displacement between the surfaces 58, 62 is one third of the width 14, two thirds of the edge 12 extends from the mold 50. It should be understood that during the second part of the process, the two thirds of the edge 12 that extends from the mold 50 includes one third of the edge12 that did not extend from the mold 50 during the first part of the process.

The frame 64 frames a second high impact polystyrene sheet 94, similar to the sheet 67. The frame 64 with the sheet 94 is fixedly positioned above the mold 50. The heater 68 is positioned proximal to the frame 64.

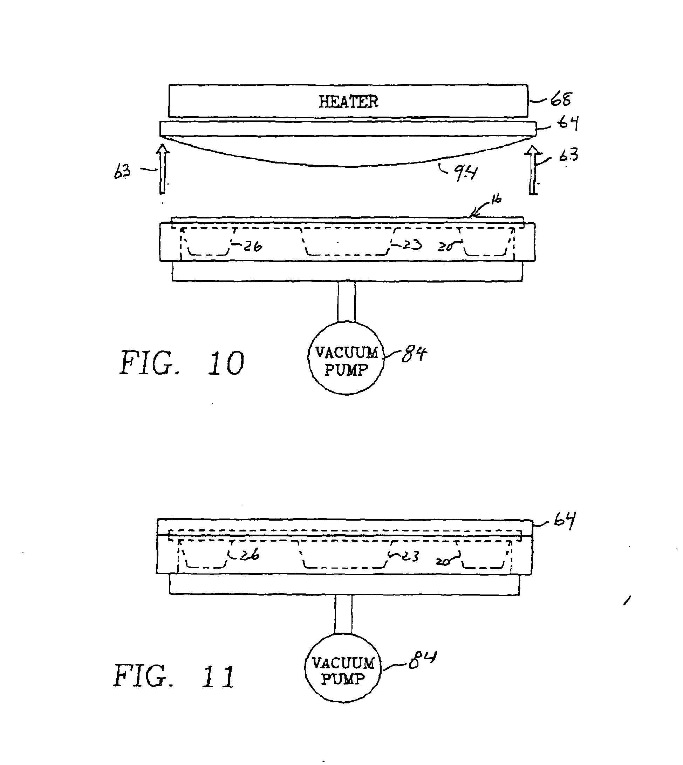

As shown in fig. 10, the heater 68 is used to heat the sheet 94 and the frame 64 mold 50 is moved in a direction of the arrows 63 in a manner similar to that described in connection with the first part of the process.

As shown in fig. 11, the mold 50 is moved until a portion of the sheet 94 that covers the surface 80 (fig. 5B) is seated upon the surface 58. Because of the holes 90 (fig. 8), when the vacuum pump 84 operates, air may pass to the pump 84. However, the sheet 94 is not porous, thereby causing one atmosphere of air pressure to draw the sheet 94 onto the top side 16. Since the sheet 94 is connected to the frame 64 as described hereinbefore, all portions of the core 10 that extend above the mold 50 contact the sheet 94.

In accordance with the second part of the process, the expanded polystyrene proximal to the portions of the surface of core 10 that extends from the mold 50 chemically combines with the high impact polystyrene of the sheet 94 to form the strengthened polystyrene. Moreover, because the displacement between the surfaces 58, 62 is less than one half of the width 14, the strengthened polystyrene is formed proximal to the entire edge 12.

The dunnage platform formed by the process weighs approximately 3.5kg (eight pounds) and can carry an approximately 1600kg (3500 pound) load.

As shown in fig.8 the legs 20C-22C, the legs 23C-25C and the legs 26C-28C are arranged in parallel columns 95-97, respectively. The columns 95-97 are spaced so that tines of a fork lift can fit between the columns 95, 96 and between the columns 96, 97. Accordingly, with the tines parallel to the columns 95-97, the fork lift can lift the dunnage platform from either of two sides.

Similarly, the legs 20C, 23C, 26C, and the legs 21C, 24C, 27C and the legs 22C, 25C, 28C are arranged in parallel rows 98-100, respectively, that are orthogonal to the columns 95-97. The rows 98-100 are spaced so that tines of a fork lift can fit between the rows 98, 99 and between the rows 99, 100. Accordingly, with the tines parallel to the columns 98-100, the fork lift can lift the dunnage platform from either of two sides.

While the invention has been particularly shown and described with reference to a preferred embodiment, it should be understood by those skilled in the art that changes in form and detail may be made therein without leaving the scope of the appended claims.

## Claims

1. A dunnage platform in the general shape of a rectangular slab comprising a core (10) with a first side (16) and a second side (18), and with an edge (12) separating the first side (16) and the second side (18), and with a plurality of legs (20, 21, 22, 23, 24, 25, 26, 27, 28) extending from one side, said core (10) being made from expanded polystyrene **characterized in that** the core (10) has a portion proximal to its surface chemically combined with first and second high impact polystyrene sheets (67, 94), wherein the first sheet (67) covers the first side (16) and at least half the edge (12) to form strengthened polystyrene and the second sheet (94) covers the second side (18) and at least half the edge (12) to form strengthened polystyrene, wherein the strengthened polystyrene is formed proximal to the entire edge (12) of the expanded polystyrene core (10).

2. The dunnage platform of claim 1 wherein said legs (20, 21, 22, 23, 24, 25, 26, 27, 28) are arranged in rows and columns that are orthogonal.

3. The dunnage platform of claim 1 or claim 2 wherein the strengthened polystyrene combines the expanded polystyrene with the high impact polystyrene sheets (67, 94) heated to a temperature in a range of 145 °C to 191 °C.

4. A method of making a dunnage platform, comprising the steps of:
using a core (10) made from expanded polystyrene in the general shape of a rectangular slab with one side having a plurality of legs (20-28) extending therefrom;
using a high impact polystyrene sheet (67, 94); and
chemically combining a portion of said core (10) proximal to its surface with said high impact polystyrene sheet (67, 94) including steps of:
using a forming mold (50) with an interior (56) that is complimentary to a shape outlined by an edge (12) of said core (10);
retaining said core (10) within said mold (50) with a first side (16) of said core (10) and at least half the thickness of said edge (12) of said core (10) extending therefrom;
heating a first high impact polystyrene sheet (67);
moving said first heated high impact polystyrene sheet (67) onto portions of said core (10) that extend from said mold(50), thereby forming strengthened polystyrene proximal to the surface of said first side (16) and proximal to a surface of at least half of the edge (12) of said core (10);
retaining said core (10) within said mold (50) with a second side (18) of said core (10) and at least half the thickness of said edge (12) of said core (10) extending therefrom;
heating a second high impact polystyrene sheet (94); and
moving said second heated high impact polystyrene sheet (94) onto portions of said core (10) that extend from said mold, thereby forming strengthened polystyrene proximal to the surface of said second side (18) and proximal to a surface of at least half of the edge (12) of said core (10) such that the strengthened polystyrene is formed proximal to the entire edge (12) of the expanded polystyrene core (10).

5. The method of claim 4 wherein said steps of heating said first and said second high impact polystyrene sheets (67, 94) further includes heating said sheets to a temperature in the range of 145°C to 191°C.

6. The method of claim 4 or claim 5 wherein said step of moving said heated first sheet (67) includes the additional steps of:
providing a vacuum pump (84); and
connecting said vacuum pump (84) to pump air from said second side (18) of said core (10).

7. The method of claim 4, claim 5 or claim 6 including the additional step of drilling one or more holes (90) through said strengthened polystyrene prior to heating said second sheet (94).

8. The method of claim 4, claim 5, claim 6 or claim 7 wherein said step of moving said heated second sheet (94) includes the additional steps of:
providing a vacuum pump (84); and
connecting said vacuum pump (84) to pump air from said drilled holes (90).

## Patentansprüche

1. Transportpalette in der allgemeinen Form einer rechteckigen Platte, die aufweist: einen Kern (10) mit einer ersten Seite (16) und einer zweiten Seite (18) und mit einer Kante (12), welche die erste Seite (16) von der zweiten Seite (18) trennt, und mit mehreren, von einer Seite ausgehenden Beinen (20, 21, 22, 23, 24, 25, 26, 27, 28), wobei der Kern aus Schaumpolystyrol besteht, **dadurch gekennzeichnet, daß** der Kern (10) einen nahe seiner Oberfläche liegenden Abschnitt aufweist, der chemisch mit ersten und zweiten Tafeln (67, 94) aus hochschlagfestem Polystyrol verbunden ist, wobei die erste Tafel (67) die erste Seite (16) und mindestens die halbe Kante (12) bedeckt, um verstärktes Polystyrol zu bilden, und wobei die zweite Tafel (94) die zweite Seite (18) und mindestens die halbe Kante (12) bedeckt, um verstärktes Polystyrol zu bilden, wobei das verstärkte Polystyrol in unmittelbarer Nähe der gesamten bestehenden Kante (12) des Schaumpolystyroikems (10) gebildet wird.

2. Transportpalette nach Anspruch 1, wobei die Beine (20, 21, 22, 23, 24, 25, 26, 27, 28) in zueinander senkrechten Zeilen und Spalten angeordnet sind.

3. Transportpalette nach Anspruch 1 oder Anspruch 2, wobei das verstärkte Polystyrol das Schaumpolystyrol mit den auf eine Temperatur im Bereich von 145°C bis 191°C erhitzten Tafeln (67, 94) aus hochschlagfestem Polystyrol verbindet.

4. Verfahren zur Herstellung einer Transportpalette, das die folgenden Schritte aufweist:
Verwendung eines Kerns (10) aus Schaumpolystyrol in der allgemeinen Form einer rechteckigen Platte mit einer Seite, von der mehrere Beine (20-28) ausgehen;
Verwendung einer Tafel (67, 94) aus hochschlagfestem Polystyrol; und chemisches Verbinden eines Abschnitts des Kerns (10) nahe seiner Oberfläche mit der Tafel (67, 94) aus hochschlagfestem Polystyrol; mit den folgenden Schritten:
Verwendung einer Form (50), deren Inneres (56) komplementär zu einer Form ist, die durch eine Kante (12) des Kerns (10) begrenzt wird;
Halten des Kerns (10) innerhalb der Form (50) mit einer ersten Seite (16) des Kerns (10) und mindestens der halben Dicke der davon ausgehenden Kante (12) des Kerns (10);
Erhitzen der ersten Tafel (67) aus hochschlagfestem Polystyrol;
Verschieben der erhitzten ersten Tafel (67) aus hochschlagfestem Polystyrol auf Abschnitte des Kerns (10), die von der Form (50) ausgehen, wodurch nahe der Oberfläche der ersten Seite (16) und nahe einer Oberfläche der mindestens halben Kante (12) des Kerns (10) verstärktes Polystyrol gebildet wird;
Halten des Kerns (10) innerhalb der Form (50) mit einer zweiten Seite (18) des Kerns (10) und mindestens der halben Dicke des davon ausgehenden Kante (12) des Kerns (10);
Erhitzen einer zweiten Tafel (94) aus hochschlagfestem Polystyrol; und
Verschieben der erhitzten zweiten Tafel (94) aus hochschlagfestem Polystyrol auf Abschnitte des Kerns (10), die von der Form ausgehen, wodurch nahe der Oberfläche der zweiten Seite (18) und nahe einer Oberfläche der mindestens halben Kante (12) des Kerns (10) verstärktes Polystyrol gebildet wird, so daß das verstärkte Polystyrol nahe der gesamten Kante (12) des Schaumpolystyrolkems (10) gebildet wird.

5. Verfahren nach Anspruch 4, wobei die Schritte zum Erhitzen der ersten und zweiten Tafeln (67, 94) aus hochschlagfestem Polystyrol ferner das Erhitzen der Tafeln auf eine Temperatur im Bereich von 145°C bis 191°C einschließen.

6. Verfahren nach Anspruch 4 oder Anspruch 5, wobei der Schritt zum Verschieben der erhitzten ersten Tafel (67) die folgenden zusätzlichen Schritte einschließt:
Bereitstellen einer Vakuumpumpe (84); und
Anschließen der Vakuumpumpe (84), um Luft aus der zweiten Seite (18) des Kerns (10) zu pumpen.

7. Verfahren nach Anspruch 4, Anspruch 5 oder Anspruch 6, das den zusätzlichen Schritt zum Bohren eines oder mehrerer Löcher (90) durch das verstärkte Polystyrol vor dem Erhitzen der zweiten Tafel (94) aufweist.

8. Verfahren nach Anspruch 4, Anspruch 5, Anspruch 6 oder Anspruch 7, wobei der Schritt zum Verschieben der erhitzten zweiten Tafel (94) die folgenden zusätzlichen Schritte aufweist:
Bereitstellen einer Vakuumpumpe (84); und
Anschließen der Vakuumpumpe (84), um Luft aus den gebohrten Löchern (90) zu pumpen.

## Revendications

1. Plateforme d'arrimage en forme générale d'une plaque rectangulaire comprenant un noyau (10) avec un premier côté (16) et un second côté (18), et avec une bordure (12) séparant le premier côté (16) et le second côté (18), et avec plusieurs pattes (20, 21, 22, 23, 24, 25, 26, 27, 28) s'étendant depuis un côté, ladite partie centrale (10) étant faite de polystyrène expansé **caractérisée en ce que** le noyau (10) a une partie proximale à sa surface combinée chimiquement avec les première et seconde feuilles de polystyrène choc (67, 94), la première feuille (67) couvrant le premier côté (16) et au moins la moitié de la bordure (12) pour former du polystyrène renforcé et la seconde feuille (94) couvrant le second côté (18) et au moins la moitié de la bordure (12) pour former du polystyrène renforcé, le polystyrène renforcé étant formé de manière proximale par rapport à l'entière bordure (12) du noyau de polystyrène (10).

2. Plateforme d'arrimage selon la revendication 1, dans laquelle lesdites pattes (20, 21, 22, 23, 24, 25, 26, 27, 28) sont disposées en lignes et en colonnes qui sont orthogonales.

3. Plateforme d'arrimage selon la revendication 1 ou 2, dans laquelle le polystyrène renforcé combine le polystyrène expansé avec les feuilles de polystyrène choc (67, 94) chauffées à une température dans un intervalle de 145°C à 191°C.

4. Méthode pour fabriquer une plateforme d'arrimage, comprenant les étapes:
d'utiliser un noyau (10) fait de polystyrène expansé en forme générale d'une plaque rectangulaire avec un côté ayant plusieurs pattes (20-28) s'étendant à partir de celui-ci;
d'utiliser une feuille de polystyrène choc (67, 94); et
de combiner chimiquement une partie dudit noyau (10) proximale à sa surface avec ladite feuille de polystyrène choc (67, 94) comprenant les étapes:
d'utiliser un moule de formage (50) avec un intérieur (56) qui est complémentaire à une forme délimitée par une bordure (12) dudit noyau (10);
de retenir ledit noyau (10) dans ledit moule (50) avec un premier côté (16) dudit noyau (10) et au moins la moitié de l'épaisseur de ladite bordure (12) dudit noyau (10) s'étendant à partir de là;
de chauffer une première feuille de polystyrène choc (67);
de déplacer ladite première feuille de polystyrène choc chauffée (67) sur des parties dudit noyau (10) qui s'étendent dudit moule (50), formant par cela du polystyrène renforcé de manière proximale par rapport à la surface dudit premier côté (16) et de manière proximale par rapport à une surface d'au moins la moitié de la bordure (12) dudit noyau (10);
de retenir ledit noyau (10) dans ledit moule (50) avec un second côté (18) dudit noyau (10) et au moins la moitié de l'épaisseur de ladite bordure (12) dudit noyau (10) s'étendant à partir de celle-ci;
de chauffer une seconde feuille de polystyrène choc (94); et
de déplacer ladite seconde feuille de polystyrène choc chauffée (94) sur des parties dudit noyau (10) qui s'étendent dudit moule, formant par cela du polystyrène renforcé de manière proximale par rapport à la surface dudit second côté (18) et de manière proximale par rapport à une surface d'au moins la moitié de la bordure (12) dudit noyau (10) de sorte que le polystyrène renforcé se forme de manière proximale par rapport à la bordure tout entière (12) du noyau de polystyrène expansé (10).

5. Méthode selon la revendication 4, dans laquelle lesdites étapes de chauffer ladite première et ladite seconde feuilles de polystyrène choc (67, 94) comprend en outre le fait de chauffer lesdites feuilles à une température dans l'intervalle de 145°C à 191°C.

6. Méthode selon la revendication 4 ou 5, dans laquelle ladite étape de déplacer ladite première feuille chauffée (67) comprend les étapes additionnelles:
de fournir une pompe à vide (84); et
de connecter ladite pompe à vide (84) pour pomper de l'air dudit second côté (18) dudit noyau (10).

7. Méthode selon la revendication 4, la revendication 5 ou la revendication 6 comprenant l'étape additionnelle de percer un ou plusieurs trous (90) à travers ledit polystyrène renforcé avant de chauffer ladite seconde feuille (94).

8. Méthode selon la revendication 4, la revendication 5, la revendication 6 ou la revendication 7, dans laquelle ladite étape de déplacer ladite seconde feuille chauffée (94) comprend les étapes additionnelles:
de fournir une pompe à vide (84); et
de connecter ladite pompe à vide (84) pour pomper de l'air desdits trous percés (90).
